(19) Europäisches Patentamt
European Patent Office
Office européen des brevets

(11) **EP 2 342 943 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(21) Anmeldenummer: **09783314.9**

(22) Anmeldetag: **23.09.2009**

(51) Int Cl.:
***H05B 6/12*** *(2006.01)* ***H05B 6/02*** *(2006.01)*

(86) Internationale Anmeldenummer:
**PCT/EP2009/062307**

(87) Internationale Veröffentlichungsnummer:
**WO 2010/037675 (08.04.2010 Gazette 2010/14)**

(54) **KOCHFELD UND VERFAHREN ZUM BETREIBEN EINES KOCHFELDS**

COOKTOP AND METHOD FOR OPERATING A COOKTOP

PLAQUE DE CUISSON ET PROCÉDÉ PERMETTANT DE FAIRE FONCTIONNER UNE PLAQUE DE CUISSON

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.09.2008 DE 102008042512**

(43) Veröffentlichungstag der Anmeldung:
**13.07.2011 Patentblatt 2011/28**

(73) Patentinhaber: **BSH Hausgeräte GmbH**
**81739 München (DE)**

(72) Erfinder:
• **ALDANA ARJOL, Oscar Luis**
**E-50003 Zaragoza (ES)**
• **HERNANDEZ BLASCO, Pablo Jesus**
**E-50410 Cuarte de Huerva (Zaragoza) (ES)**

• **MILLAN SERRANO, Ignacio**
**E-50018 Zaragoza (ES)**
• **MONTERDE AZNAR, Fernando**
**E-50013 Zaragoza (ES)**
• **PALACIOS TOMAS, Daniel**
**E-50002 Zaragoza (ES)**

(74) Vertreter: **Richter, Harald et al**
**BSH Hausgeräte GmbH**
**Zentralabteilung Gewerblicher Rechtsschutz**
**Carl-Wery-Strasse 34**
**81739 München (DE)**

(56) Entgegenhaltungen:
**EP-A- 1 137 324 EP-A- 1 303 168**
**EP-A- 1 951 003 DE-A1-102004 003 126**

EP 2 342 943 B1

**Beschreibung**

Die Erfindung geht aus von einem Kochfeld nach dem Oberbegriff des Anspruchs 1 und von einem Verfahren zum Betreiben eines solchen Kochfelds nach dem Oberbegriff des Anspruchs 12.

Aus dem Stand der Technik sind Kochfelder mit mehreren zu einer Heizzone zusammengefassten Heizelemente bekannt. Die Heizelemente können beispielsweise konzentrisch angeordnet sein und so betrieben werden, dass äußere Ringe der Heizzone nur dann aktiviert werden, wenn ein Topfdurchmesser eines auf die Heizzone aufgestellten Topfs einen Grenzwert überschreitet. In anderen bekannten Kochfeldern sind viele Heizelemente in einer Matrix oder einem Gitter angeordnet, beispielsweise einem 4x4, 6x6 oder 8x8 Gitter. Ein auf das Kochfeld aufgestelltes Kochgeschirrelement wird detektiert und mehrere unter dem Boden des Kochgeschirrelements angeordnete Heizelemente werden zu einer frei konfigurierbaren Heizzone zusammengefasst.

Die zu einer Heizzone zusammengefassten Heizelemente werden jeweils von einer Stromversorgungseinheit mit einem Heizstrom versorgt. Insbesondere dann, wenn die Heizelemente Induktionsheizkörper bzw. Induktoren sind, ist häufig jedem Induktor eine als Wechselrichter ausgebildete Stromversorgungseinheit zugeordnet, über welche der Induktor unabhängig von den anderen Induktoren betrieben werden kann. Eine Steuereinheit umfasst Mittel bzw. geeignete Treibereinheiten zum Bestimmen einer Kenngröße des Heizstroms, beispielsweise einer Amplitude, einer Frequenz, einer Gleichstrom-Spannung oder einer Phase. Die Steuereinheit umfasst ferner Mittel bzw. geeignete Schnittstellen oder Treibereinheiten zum Betätigen der Schalteinheit abhängig von einer gewählten Leistungsstufe. Die Leistungsstufe kann über eine Benutzerschnittstelle vom Benutzer gewählt werden.

Insbesondere im Bereich von Induktionskochfeldern kann sich beim Betrieb von mehreren zusammengefassten Heizelementen ein Problem dadurch ergeben, dass die verschiedenen Induktionsheizelemente simultan mit der gleichen Frequenz betrieben werden müssen, um Intermodulationsbrummen zu vermeiden. In Induktionskochfeldern wird in der Regel die Heizleistung durch eine Variation der Frequenz des Heizstroms bestimmt, so dass der synchronisierte Betrieb der Induktionsheizkörper gleichzeitig eine unabhängige Bestimmung der Heizleistungen der beiden Heizelemente unmöglich macht. Es ist ferner bekannt, mehrere Induktionsheizelemente eines Induktionskochfelds, die unterschiedlichen Heizzonen zugeordnet sind, mit unterschiedlichen Frequenzen zu betreiben und zur Vermeidung von hörbarem Brummen zu beachten, dass eine Differenz zwischen den Frequenzen der Heizströme einen durch die Hörbarkeitsschwelle des menschlichen Ohrs bestimmten Minimalwert nicht unterschreitet. Besonders empfindliche Menschen und Kinder können das Brummen unter Umständen jedoch trotzdem wahrnehmen und sich durch das Brummen gestört fühlen.

Im Bereich von Kochfeldern mit Strahlungsheizkörpern ist es ferner bekannt, zum Erreichen einer bestimmten, über eine Heizperiode gemittelten Heizleistung die Heizelemente periodisch ein- und auszuschalten. Ein Verhältnis der Dauer der Phasen, in welchen ein Heizelement eingeschaltet ist, zur Gesamtdauer der Heizperiode entspricht dann einem Verhältnis der Soll-Heizleistung zu einer Maximalheizleistung.

Sowohl in Induktionskochfeldern als auch in Kochfeldern mit Strahlungsheizkörpem kann das gleichzeitige Ein- und Ausschalten mehrerer Heizelemente zu einem Problem mit Flicker, das heißt einer Rückkopplung des Kochfelds auf das Haushaltsstromnetz, führen. Der Flicker kann zu Spannungsspitzen führen, die das Haushaltsstromnetz kurzzeitig überlasten, selbst wenn außerhalb der Spannungsspitzen die Maximalleistung des Haushaltsstromnetzes noch nicht ausgeschöpft ist.

DE 102 004 003 126 offenbart ein Kochfeld der Stand der Technik.

Der Erfindung liegt insbesondere die Aufgabe zugrunde, die Heizleistung von mehreren Heizelementen, die zu einer Heizzone zusammengefasst sind, unabhängig voneinander bestimmbar zu gestalten, ohne dass es zu Problemen mit Flicker und/oder Brummen kommt.

Die Erfindung geht aus von einem Kochfeld mit mehreren zu einer Heizzone zusammengefassten Heizelementen, wenigstens einer Stromversorgungseinheit zum Erzeugen eines Heizstroms zum Betreiben der Heizelemente, einer Schalteinheit zum Öffnen und Schließen eines die wenigstens eine Stromversorgungseinheit und wenigstens eines der Heizelemente umfassenden Stromkreises und einer Steuereinheit mit Mitteln zum Bestimmen einer Kenngröße des Heizstroms und Mitteln zum Betätigen der Schalteinheit abhängig von einer zum Betreiben der Heizzone gewählten Leistungsstufe.

Es wird vorgeschlagen, dass die Steuereinheit dazu ausgelegt ist, in wenigstens einem ersten Betriebszustand zumindest zwei der zu einer Heizzone zusammengefassten Heizelemente in unterschiedlichen Phasen einer Heizperiode zu aktivieren. Im Vergleich zu dem gleichzeitigen Ein- und Ausschalten der Heizelemente in den gleichen Phasen der Heizperiode kann eine Fluktuationsbreite der Leistungsaufnahme des Kochfelds reduziert werden, was zu geringeren Problemen mit Flicker führt. Ferner ist es ohne weiteres möglich, die zu einer Heizzone zusammengefassten Heizelemente mit unterschiedlichen Frequenzen zu betreiben, ohne dass es zu Interferenzbrummen kommen kann. Dadurch können die über die Heizperiode gemittelten Heizleistungen der einzelnen Heizelemente unabhängig voneinander bestimmt werden, was insbesondere im Bereich niedriger mittlerer Heizleistungen eine sichere und präzise Steuerung der Heizleistung ermöglicht. Die über die Heizperiode gemittelte Heizleistung kann nicht nur durch die Einstellung der Kenngrößen des Heizstroms, beispielsweise durch die Einstellung der Frequenz des Heizstroms, sondern auch durch die Einstellung der Längen der unterschiedlichen Phasen ermöglicht werden. Die Dauer der Heizperiode kann bei Induktionskochfeldern bei 1 - 20 Sekunden und bei Strahlungskochfeldern zwischen 1 und 5 Minuten liegen.

Wegen der natürlichen bzw. durch den Wechselrichter bedingten Grenzen der Heizfrequenz und den dort besonders vordringlichen Problemen mit dem Interferenzbrummen kommen die Vorteile der Erfindung insbesondere dann zum Tragen, wenn das Kochfeld ein Induktionskochfeld ist. Die Heizelemente sind dann Induktionsheizelemente und die Stromversorgungseinheit ist ein Wechselrichter. Die Kenngröße des Heizstroms kann die Frequenz des Heizstroms sein.

Nach der Erfindung wird vorgeschlagen, dass die Steuereinheit dazu ausgelegt ist, jeweils zumindest eine Induktivität und einen Leistungsfaktor der wenigstens zwei zu einer Heizzone zusammengefassten Heizelemente zu bestimmen und den Betriebszustand abhängig von den Induktivitäten und Leistungsfaktoren der beiden Heizelemente und abhängig von der gewählten Leistungsstufe zu bestimmen. Dadurch kann der Betriebszustand situationsabhängig und flexibel bestimmt werden und der Heizbetrieb kann vorteilhaft an die magnetischen Eigenschaften des auf die Heizzone aufgestellten Kochgeschirrelements angepasst werden. Die magnetischen Eigenschaften beeinflussen die Induktivität und den Leistungsfaktor, so dass durch die Messung der Induktivität und des Leistungsfaktors Rückschlüsse auf die Art des Kochgeschirrelements gezogen werden können. Insbesondere kann der Betriebszustand in einer Weise gewählt werden, die ein homogenes Heizen des Bodens des Kochgeschirrelements erlaubt. Heiße, durch eine zu große Heizleistung eines der Heizelemente bedingte Bereiche am Boden des Kochgeschirrelements können vermieden werden.

Obwohl es prinzipiell auch möglich ist, zeitlich überlappende Phasen zu wählen, sind die Vorteile im Hinblick auf die Flickerreduktion insbesondere dann erreichbar, wenn die unterschiedlichen Phasen überlappungsfrei unmittelbar aufeinander folgen oder durch ein Zeitintervall getrennt sind.

Wegen der starken Interferenzen zwischen solchen Induktionsheizelementen kommen die Vorteile der Erfindung insbesondere dann zum Tragen, wenn die zu einer Heizzone zusammengefassten Heizelemente konzentrisch angeordnet sind. Die Heizzone kann dann insbesondere zwei oder drei konzentrische Ringe umfassen, die abhängig von der Größe des Kochgeschirrbodens zugeschaltet werden können oder nicht.

In einer alternativen Ausgestaltung der Erfindung sind die Heizelemente in einem zweidimensionalen Gitter angeordnet. Das Kochfeld ist daher ein sogenanntes Matrix-Kochfeld. Die Steuereinheit ist dazu ausgelegt, die Heizelemente zu flexibel definierbaren Heizzonen zusammenzufassen. Der Betriebszustand und die Zuordnung der verschiedenen Heizelemente zu verschiedenen Phasen innerhalb der Heizperiode können insbesondere abhängig von einer relativen geometrischen Lage der verschiedenen Heizelemente erfolgen. Beispielsweise können Heizelemente, die bezogen auf einen Mittelpunkt des Kochgeschirrelements radial innen angeordnet sind, in einer anderen Phase aktiviert werden als Heizelemente, die radial außen angeordnet sind. Heizelemente, die stark magnetisch miteinander wechselwirken, können der gleichen Phase zugeordnet werden und mit der gleichen Frequenz betrieben werden.

Auch sehr geringe mittlere Heizleistungen können präzise eingestellt werden, wenn die Steuereinheit dazu ausgelegt ist, in zumindest einer weiteren Phase der Heizperiode keines der Heizelemente der Heizzone zu aktivieren. Die weitere Phase kann als Sicherheitsintervall zwischen den Phasen genutzt werden, in welchen die Schaltvorrichtung betätigt werden kann, und reduziert den über die Heizperiode gemittelten Wert der Heizleistung.

Ferner wird vorgeschlagen, dass die Steuereinheit dazu ausgelegt ist, in wenigstens einem zweiten Betriebszustand alle zu der Heizzone zusammengefassten Heizelemente simultan zu betreiben. So können auch hohe Heizleistungen im Bereich der maximalen Nominal-Heizleistung der Heizzone erreicht werden und der alternierende Betrieb der Heizelemente kann auf Leistungsstufen mit geringen Heizleistungen beschränkt werden.

Die Flexibilität des Betriebs und die Anpassung an das Kochgeschirrelement können weiter erhöht werden, wenn die Steuereinheit dazu ausgelegt ist, eine Größe, beispielsweise einen Durchmesser, eines auf die Heizzone aufgestellten Kochgeschirrelements zu ermitteln. Die Steuereinheit kann insbesondere die Länge der unterschiedlichen Phasen abhängig von der Größe bestimmen, um eine über eine Bodenfläche des Kochgeschirrelements homogene Heizleistung zu erreichen.

Eine vorgegebene räumliche Verteilung der Heizleistung auch innerhalb der Heizzone kann in einer einfachen Weise realisiert werden, wenn die Steuereinheit dazu ausgelegt ist, die Länge der unterschiedlichen Phasen so zu bestimmen, dass die in den unterschiedlichen Phasen von den Heizelementen erzeugten Heizleistungen in einem vorgegebenen Verhältnis stehen. Alternativ oder ergänzend dazu können auch die Frequenzen so bestimmt werden, dass das vorgegebene Verhältnis der in den unterschiedlichen Phasen erzeugten Heizleistungen erreicht wird.

Die Steuerungslogik kann durch eine Reduktion der Anzahl von Variablen vereinfacht werden, wenn die zumindest zwei in unterschiedlichen Phasen einer Heizperiode aktivierten Heizelemente in zumindest einem Bereich von Leistungsstufen mit der gleichen Heizleistung betrieben werden. Die relativen Heizleistungen können dann durch eine Wahl der Phasenlänge bestimmt werden.

Alternativ dazu kann die Flexibilität durch eine maximale Zahl von Variablen erhöht werden, wenn die zumindest zwei in unterschiedlichen Phasen einer Heizperiode aktivierten Heizelemente in zumindest einem Bereich von Leistungsstufen mit unterschiedlichen Heizleistungen betrieben werden.

Ein weiterer Aspekt der Erfindung betrifft ein Verfahren zum Betreiben eines Kochfelds mit mehreren zu einer Heizzone zusammengefassten Heizelementen. Das Kochfeld umfasst eine Stromversorgungseinheit zum Erzeugen eines Heizstroms zum Betreiben der Heizelemente, eine Schalteinheit zum Öffnen und Schließen eines Stromkreises, der wenigstens die eine Stromversorgungseinheit und wenigstens eines der Heizelemente umfasst. Gemäß dem erfindungsgemäßen Verfahren wird eine Kenngröße des Heizstroms abhängig von einer zum Betreiben der Heizzone gewählten Leistungsstufe bestimmt und/oder die Schalteinheit wird abhängig von der gewählten Leistungsstufe betätigt.

Es wird vorgeschlagen, dass in wenigstens einem Betriebszustand zumindest zwei der zu einer Heizzone zusammengefassten Heizelemente in unterschiedlichen, insbesondere überlappungsfreien Phasen einer Heizperiode aktiviert werden. Durch das erfindungsgemäße Verfahren zum Betreiben eines Kochfelds können die im Zusammenhang mit dem erfindungsgemäßen Kochfeld beschriebenen Vorteile in der gleichen Weise erreicht werden. Das erfindungsgemäße Verfahren ist insbesondere auf Induktionskochfelder anwendbar, deren Stromversorgungseinheit ein Wechselrichter ist und deren Heizelemente Induktionsheizelemente sind.

Eine flexible Anpassung des Betriebszustands an die insbesondere auch adaptiv durch das aufgestellte Kochgeschirrelement bestimmten Betriebsbedingungen kann erreicht werden, wenn das Verfahren zudem das Bestimmen zumindest jeweils einer Induktivität und eines Leistungsfaktors der Heizelemente umfasst. Der Betriebszustand kann abhängig von den derart bestimmten Induktivitäten und Leistungsfaktoren der Heizelemente sowie abhängig von der gewählten Leistungsstufe bestimmt werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 eine Heizzone eines Kochfelds mit zwei Stromversorgungseinheiten, einer Schalteinheit und einer Steuereinheit,

Fig. 2 eine schematische Darstellung zur Aktivierung verschiedener Heizelemente der Heizzone aus Fig. 1 in einer Heizperiode,

Fig. 3 eine schematische Darstellung der Aktivierung der beiden Heizelemente der Heizzone aus Fig. 1 während einer Heizperiode in einem alternativen Betriebsmodus,

Fig. 4 eine schematische Darstellung zur Aktivierung der Heizelemente in unterschiedlichen Phasen einer Heizperiode, wobei in einer weiteren Phase keines der Heizelemente aktiviert ist,

Fig. 5 eine schematische Darstellung zur Aktivierung der beiden Heizelemente der Heizzone aus Fig. 1 in einem Betriebsmodus, in dem beide Heizelemente gleichzeitig aktiviert werden,

Fig. 6 eine schematische Darstellung zur Auswahl verschiedener Betriebsmodi abhängig von einer eingestellten Leistungsstufe.

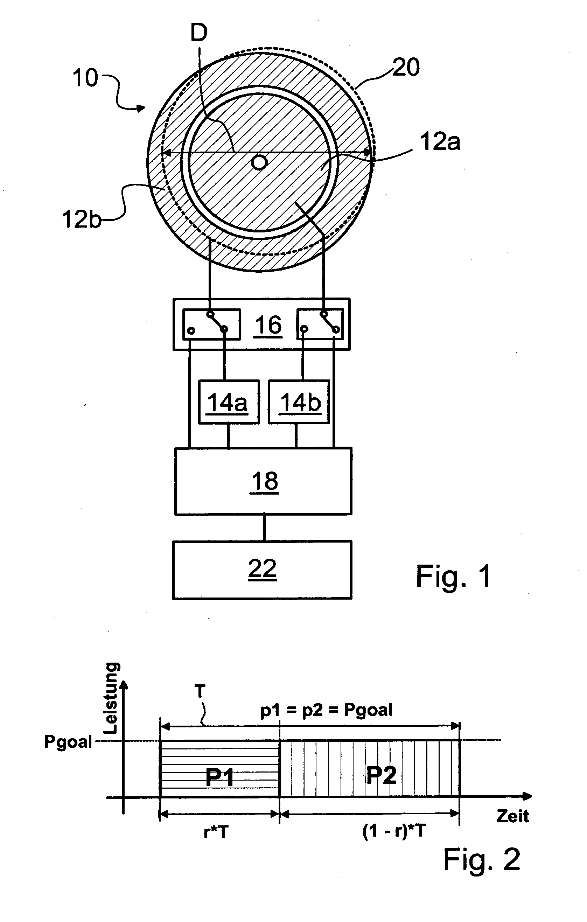

Fig. 1 zeigt schematisch ein Kochfeld mit einer Heizzone 10, die aus zwei konzentrischen Heizelementen 12a und 12b zusammengesetzt ist. Auf einer Abdeckplatte (nicht dargestellt) des Kochfelds aus Glas oder Glaskeramik ist ein Kochgeschirrelement 20 aufgestellt. Eine Steuereinheit 18 des Kochfelds detektiert einen Durchmesser D des Kochgeschirrelements 20, beispielsweise eines Topfs oder einer Pfanne, und schaltet das radial äußere Heizelement 12b der Heizzone zu, wenn der Durchmesser D des Kochgeschirrelements 20 einen vorgegebenen Schwellenwert überschreitet. In alternativen Ausgestaltungen der Erfindung kann der Bediener über eine Benutzerschnittstelle 22 das radial äußere Heizelement 12b bei Bedarf manuell zuschalten.

Das in Fig. 1 dargestellte Kochfeld ist als Induktionskochfeld ausgebildet und die Heizelemente 12a, 12b sind Induktoren, die von als Wechselrichter ausgebildeten Stromversorgungseinheiten 14a, 14b gespeist werden. Stromkreise, die jeweils eines der Heizelemente 12a, 12b und einen der Wechselrichter 14a, 14b umfassen, können über eine Schalteinheit 16 geöffnet oder geschlossen werden. Die Schalteinheit 16 kann elektromechanische Relais oder Hochleistungs-Halbleiterschaltelemente wie MOSFET's umfassen. Die Steuereinheit 18 betätigt sowohl die Wechselrichter 14a, 14b als auch die Schalteinheit 16 über geeignete Signalleitungen, die an entsprechende Schnittstellen der Steuereinheit 18 angeschlossen sind.

Im Betrieb des Kochfelds kann der Benutzer über die Benutzerschnittstelle 22 eine Leistungsstufe zum Betrieb des Kochfelds aus insgesamt 18 möglichen Leistungsstufen auswählen. Abhängig von der gewählten Leistungsstufe taktet die Steuereinheit 18 Öffnungs- und Schließvorgänge der Schalteinheit 16 und bestimmt eine Frequenz der von den Wechselrichtern 14a, 14b erzeugten Heizströme.

Bei niedrigeren Leistungsstufen betreibt die Steuereinheit 18 die Heizelemente 14a, 14b in einem getakteten Betrieb. Die Länge dieser Takte wird hier und im Folgenden als Heizperiode T bezeichnet und kann in verschiedenen Ausgestaltungen der Erfindung zwischen 0,5 und 20 s für Induktionskochfelder und zwischen 30 s und 2 min für Strahlungskochfelder betragen.

Fig. 2 zeigt schematisch unterschiedliche Phasen P1, P2 einer Heizperiode T, in welchen die beiden Heizelemente 12a, 12b betrieben werden. Die Phasen P1, P2 sind überlappungsfrei und folgen unmittelbar aufeinander. Die Länge der Phasen P1, P2 entspricht in der Summe der Länge der Heizperiode T. Die während den verschiedenen Phasen P1, P2 von den beiden Heizelementen 12a, 12b erzeugte Heizleistung entspricht der abhängig von der Leistungsstufe bestimmten Soll-Heizleistung Pgoal. Ein Verhältnis r der Längen der beiden Phasen P1, P2 bestimmt das Verhältnis der während der Heizperiode T von den einzelnen konzentrischen Heizelementen 12a, 12b erzeugten Heizleistungen p1, p2. Das Verhältnis r wird von der Steuereinheit 18 abhängig von dem Durchmesser D des Kochgeschirrelements 20 bestimmt, der automatisch detektiert wird. Zum Detektieren des Durchmessers D wertet die Steuereinheit 18 eine durch das Kochgeschirrelement 20 bestimmte Induktivität des inneren Induktors 12a und des äußeren Induktors 12b sowie die Leistungsfaktoren des inneren Induktors 12a und des äußeren Induktors 12b aus.

Der Leistungsfaktor beschreibt das Verhältnis des Realteils der Impedanz Z, also des Widerstands R zum Betrag der Impedanz Z und entspricht damit dem Cosinus des Verlustwinkels. Je größer der Leistungsfaktor desto stärker ist die Kopplung zwischen den Induktoren 12a, 12b und dem Boden des Kochgeschirrelements 20. Aus einem großen Wert des Leistungsfaktors kann daher auf eine lokal starke Heizleistung in dem Bereich geschlossen werden, in welchem der Boden des Kochgeschirrelements 20 mit dem entsprechenden Heizelement 12a, 12b überlappt.

Da die Soll-Heizleistung Pgoal in den Betriebsmodus gemäß Fig. 2 der Heizleistung eines einzigen Induktors 12a, 12b in kontinuierlichem Betrieb entspricht, ist die Anwendbarkeit des in Fig. 2 dargestellten Betriebsmodus auf einen Bereich von Heizleistungen beschränkt, der zwischen der minimalen Heizleistung eines Induktors im Dauerbetrieb und der maximalen Heizleistung dieses Induktors im Dauerbetrieb liegt.

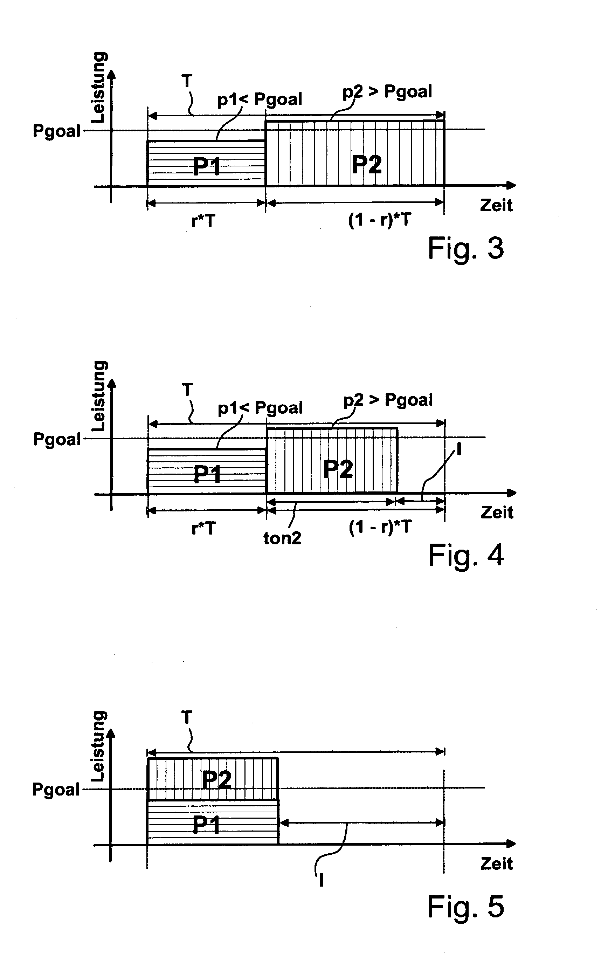

Fig. 3 zeigt schematisch einen weiteren Betriebsmodus, in welchem die Induktoren 12a, 12b aufgrund ihrer konstruktiven Ausgestaltung oder aufgrund der Tatsache, dass sie unterschiedlich stark an das Kochgeschirrelement 20 koppeln, unterschiedliche Heizleistungen p1, p2 erzeugen. In Fig. 3 ist der Fall dargestellt, dass p1 kleiner als die Soll-Heizleistung Pgoal und p2 größer als die Soll-Heizleistung Pgoal ist. Die Dauer der Phase P1, in welcher das innere Heizelement 12a betrieben wird, beträgt r' x T und die Dauer der Phase P2, in welcher das radial äußere Heizelement 12b betrieben wird, beträgt (1-r' xT).

Der Parameter r' wird bestimmt durch die Gleichung

$$r' = 1 - \frac{Pgoal \cdot (1-r)}{P2},$$

wobei der Parameter r wie in dem in Fig. 2 dargestellten Betriebsmodus abhängig von einem Überlappungsgrad zwischen dem Topfboden und dem Heizelement 12a, 12b so bestimmt wird, dass eine über den Topfboden homogene Flächenheizleistung erreicht wird.

Fig. 4 zeigt einen weiteren Betriebsmodus, in welchem die Dauer einer ersten Phase P1 durch r x t bestimmt wird, wenn die Soll-Heizleistung Pgoal der Heizleistung p1 des ersten Heizelements 12a entspricht. Die Heizleistung p2 des zweiten Induktors 12b ist größer als die Soll-Heizleistung. Die Dauer ton2 der zweiten Phase P2 wird gegenüber der Dauer ton1 = (1 - r)xT der ersten Phase P1 gemäß dem Betriebsmodus in Fig. 2 um das Verhältnis zwischen der Sollheizleistung Pgoal und der Heizleistung p2 des zweiten Induktors 12b reduziert. Es ergibt sich Gleichung

$$ton2 = (1 - r) \times T \times Pgoal / P2.$$

Ein Intervall I von der Länge (1 - r) x T - ton 2 ist dadurch gekennzeichnet, dass keines der Heizelemente 12a, 12b betrieben wird. Der in Figur 4 dargestellte Betriebsmodus kann insbesondere dann verwendet werden, wenn der zweite Induktor 12b mit der Heizleistung p2 bereits eine minimale Heizleistung erreicht hat, so dass eine weitere Variation der Heizleistung bei vorgegebenem Verhältnis r zwischen den insgesamt von den beiden Heizelementen 12a, 12b erzeugten Heizleistungen durch eine Variation der Länge des Intervalls I und der Heizleistung p1 erreicht werden kann.

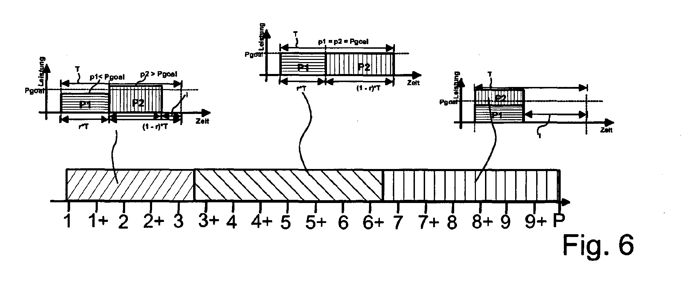

Fig. 6 zeigt schematisch eine Zuordnung zwischen verschiedenen Leistungsstufen zwischen 1 und einer Booster-Leistungsstufe P und verschiedenen Betriebsmodi. In einem ersten Betriebsmodus werden beide Induktoren 12a, 12b bzw. in den in Fig. 6 dargestellten Ausführungsbeispielen beide Gruppen von Induktoren 12a, 12b mit ihrer minimalen Leistung in unterschiedlichen Phasen P1, P2 betrieben. Die über die Heizperiode T gemittelte Heizleistung wird bei konstantem Verhältnis r bzw. r' zwischen den Längen der Phasen P1, P2 durch eine Veränderung der Dauer der Phasen P1, P2 in gleichem Verhältnis erreicht. Entsprechend wird das Intervall I in seiner Länge so angepasst, dass es die Summe der beiden Phasen zur Dauer der Heizperiode T ergänzt. Der in dem Bereich geringer Leistungsstufen verwendete Betriebsmodus entspricht im Wesentlichen dem in Fig. 4 dargestellten Betriebsmodus. In einem zweiten Bereich von Leistungsstufen verwendet die Steuereinheit 18 einen zweiten Betriebsmodus, in welchem die Frequenz des Heizstroms eines der Induktoren 12a, 12b variiert wird, während der andere Induktor weiter mit der minimalen Frequenz bzw. minimalen Heizleistung betrieben wird. Dabei wird die Dauer der Phasen gemäß den in Fig. 3 illustrierten Schema so bestimmt, dass die Verteilung der Heizleistung über die beiden Induktoren 12a, 12b dem vorgegebenen Verhältnis r entspricht.

Wenn die Heizleistung bzw. die variable Heizfrequenz einen Schwellenwert erreicht, schaltet die Steuereinheit 18 in einen dritten Betriebsmodus, in welchen die Heizelemente 12a, 12b der Heizzone 10 simultan mit gleicher Frequenz betrieben werden. Die Dauer der Phasen P1, P2 ist gemäß dem in Fig. 2 oder 3 dargestellten Schema so bestimmt, dass eine über den Topfboden des Kochgeschirrelements 20 homogene Heizleistung erreicht wird.

Wenn die Maximalfrequenz der Wechselrichter 14a, 14b erreicht ist, schaltet die Steuereinheit 18 schließlich in einen vierten Betriebsmodus, der dem in Fig. 5 illustrierten Schema entspricht und in welchem die beiden Heizelemente 12a, 12b simultan betrieben werden.

Das erfindungsgemäße Verfahren zum Betreiben eines Kochfelds ermöglicht eine flexible Einstellung eines Verhältnisses der von verschiedenen Induktoren erzeugten Heizleistungen, so dass eine vorteilhafte Temperaturverteilung im Kochgeschirrelement 20 erreicht werden kann. Da insbesondere in den Betriebsmodi mit geringer Heizleistung die Wechselrichter 14a, 14b und die Induktoren 12a, 12b nicht gleichzeitig betrieben werden, können diese mit verschiedenen Frequenzen betrieben werden, ohne dass Probleme mit einem Intermodulationsbrummen auftreten könnten. Flicker-Rauschen in der Stromversorgung kann vermieden werden, da Sprünge in der Leistungsaufnahme des Kochfelds auf ein Minimum reduziert werden und eine Leistungsdifferenz zwischen den verschiedenen Phasen P1 und P2 der Heizperiode T gering gehalten wird.

Bezugszeichen

| | |
|---|---|
| 10 | Heizzone |
| 12a | Heizelement |
| 12b | Heizelement |
| 14 | Stromversorgungseinheit |
| 16 | Schalteinheit |
| 18 | Steuereinheit |
| 20 | Kochgeschirrelement |
| 22 | Benutzerschnittstelle |
| p2 | Heizleistung |
| p1 | Heizleistung |
| I | Induktivität |
| PF1 | Leistungsfaktor |
| PF2 | Leistungsfaktor |
| L1 | Induktivität |
| L2 | Induktivität |
| f1 | Frequenz |
| f2 | Frequenz |
| P1 | Phase |
| P2 | Phase |
| T | Heizperiode |

**Patentansprüche**

1. Kochfeld mit:

   - mehreren zu einer Heizzone (10) zusammenfassbaren Heizelementen (12a, 12b),
   - wenigstens einer Stromversorgungseinheit (14) zum Erzeugen eines Heizstroms zum Betreiben der Heizelemente (12a, 12b),
   - einer Schalteinheit (16) zum Öffnen und Schließen eines die wenigstens eine Stromversorgungseinheit (14) und wenigstens eines der Heizelemente (12a, 12b) umfassenden Stromkreises und
   - einer Steuereinheit (18) mit Mitteln zum Bestimmen einer Kenngröße des Heizstroms und Mitteln zum Betätigen der Schalteinheit (16) abhängig von einer zum Betreiben der Heizzone (10) gewählten Leistungsstufe, wobei die Steuereinheit (18) dazu ausgelegt ist, in wenigstens einem ersten Betriebszustand zumindest zwei zu einer Heizzone (10) zusammengefasste Heizelemente (12a, 12b) in unterschiedlichen Phasen (P1, P2) einer Heizperiode (T) zu aktivieren, **dadurch gekennzeichnet, dass**

   die Steuereinheit (18) dazu ausgelegt ist, jeweils zumindest eine Induktivität (L1, L2) und einen Leistungsfaktor (PF1, PF2) der wenigstens zwei zu einer Heizzone (10) zusammengefassten Heizelemente (12a, 12b) zu bestimmen und den Betriebszustand abhängig von den Induktivitäten (L1, L2) und Leistungsfaktoren (PF1, PF2) der beiden Heizelemente (12a, 12b) und abhängig von der gewählten Leistungsstufe zu bestimmen.

2. Kochfeld nach Anspruch 1, **dadurch gekennzeichnet, dass** die Heizelemente (12a, 12b) Induktionsheizelemente, die Stromversorgungseinheit (14) ein Wechselrichter und die Kenngröße des Heizstroms eine Frequenz (f1, f2) des Heizstroms sind.

3. Kochfeld nach einem der vorhergehenden Ansprüche, **dadurch gekennzeichnet, dass** die unterschiedlichen Phasen (P1, P2) aufeinander folgen oder durch ein Zeitintervall (I) getrennt sind.

4. Kochfeld nach einem der vorhergehenden Ansprüche, **dadurch gekennzeichnet, dass** die zu einer Heizzone (10) zusammengefassten Heizelemente (12a, 12b) konzentrisch angeordnet sind.

5. Kochfeld nach einem der Ansprüche 1 - 3, **dadurch gekennzeichnet, dass** die Heizelemente (12a, 12b) in einem zweidimensionalen Gitter angeordnet sind und dass die Steuereinheit (18) dazu ausgelegt ist, die Heizelemente (12a, 12b) zu flexibel definierbaren Heizzonen (10) zusammenzufassen.

6. Kochfeld nach einem der vorhergehenden Ansprüche, **dadurch gekennzeichnet, dass** die Steuereinheit (18) dazu ausgelegt ist, in zumindest einer weiteren Phase (I) der Heizperiode (T) keines der Heizelemente (12a, 12b) der Heizzone (10) zu aktivieren.

7. Kochfeld nach einem der vorhergehenden Ansprüche, **dadurch gekennzeichnet, dass** die Steuereinheit (18) dazu ausgelegt ist, in wenigstens einem zweiten Betriebszustand alle zu der Heizzone (10) zusammengefassten Heizelemente (12a, 12b) simultan zu betreiben.

8. Kochfeld nach einem der vorhergehenden Ansprüche, **dadurch gekennzeichnet, dass** die Steuereinheit (18) dazu ausgelegt ist, eine Größe (D) eines auf die Heizzone (10) aufgestellten Kochgeschirrelements (20) zu ermitteln und die Länge der unterschiedlichen Phasen (P1, P2) abhängig von der Größe (D) zu bestimmen, um eine über eine Bodenfläche des Kochgeschirrelements (20) homogene Heizleistung zu erreichen.

9. Kochfeld nach einem der vorhergehenden Ansprüche, **dadurch gekennzeichnet, dass** die Steuereinheit (18) dazu ausgelegt ist, die Länge der unterschiedlichen Phasen (P1, P2) so zu bestimmen, dass die in den unterschiedlichen Phasen (P1, P2) von den Heizelementen (12a, 12b) erzeugen Heizleistungen in einem vorgegebenen Verhältnis stehen.

10. Kochfeld nach einem der vorhergehenden Ansprüche, **dadurch gekennzeichnet, dass** die zumindest zwei in unterschiedlichen Phasen (P1, P2) einer Heizperiode (T) aktivierten Heizelemente (12a, 12b) in zumindest einem Bereich von Leistungsstufen mit der gleichen Heizleistung betrieben werden.

11. Kochfeld nach einem der vorhergehenden Ansprüche, **dadurch gekennzeichnet, dass** die zumindest zwei in unterschiedlichen Phasen (P1, P2) einer Heizperiode (T) aktivierten Heizelemente (12a, 12b) in zumindest einem Bereich von Leistungsstufen mit unterschiedlichen Heizleistungen betrieben werden.

12. Verfahren zum Betreiben eines Kochfelds mit mehreren zu einer Heizzone (10) zusammengefassten Heizelementen (12a, 12b), wenigstens einer Stromversorgungseinheit (14) zum Erzeugen eines Heizstroms zum Betreiben der Heizelemente (12a, 12b), einer Schalteinheit (16) zum Öffnen und Schließen eines die wenigstens eine Stromversorgungseinheit (14) und wenigstens eines der Heizelemente (12a, 12b) umfassenden Stromkreises, wobei eine Kenngröße des Heizstroms abhängig von einer zum Betreiben der Heizzone (10) gewählten Leistungsstufe bestimmt wird und/oder die Schalteinheit (16) abhängig von der Leistungsstufe betätigt wird, wobei in wenigstens einem Betriebszustand zumindest zwei der zu einer Heizzone (10) zusammengefassten Heizelemente (12a, 12b) in unterschiedlichen Phasen (P1, P2) einer Heizperiode (T) aktiviert werden, **dadurch gekennzeichnet, dass** jeweils zumindest eine Induktivität (L1, L2) und eine Leistungsfaktor (PF1, PF2) der wenigstens zwei zu einer Heizzone (10) zusammengefassten Heizelemente (12a, 12b) bestimmt werden und dass der Betriebszustand abhängig von den Induktivitäten (L1, L2) und Leistungsfaktoren (PF1, PF2) der beiden Heizelemente (12a, 12b) und abhängig von der gewählten Leistungsstufe bestimmt wird.

13. Verfahren nach Anspruch 12, **dadurch gekennzeichnet, dass** die Heizelemente (12a, 12b) Induktionsheizelemente, die Stromversorgungseinheit (14) ein Wechselrichter und die Kenngröße des Heizstroms eine Frequenz (f1, f2) des Heizstroms sind.

**Claims**

1. Hob having:

   - a number of heating elements (12a, 12b) combined to form a heating zone (10),
   - at least one power supply unit (14) for generating a heating current for operating the heating elements (12a, 12b),
   - a switching unit (16) for opening and closing a power circuit comprising the at least one power supply unit (14) and at least one of the heating elements (12a, 12b) and
   - a control unit (18) with means for determining a characteristic variable of the heating current and means for actuating the switching unit (16) as a function of a power level selected for operating the heating zone (10), wherein the control unit (18) is designed to activate at least two heating elements (12a, 12b) combined to form a heating zone (10) in different phases (P1, P2) of a heating period (T) in at least a first operating state, **characterised in that**

   the control unit (18) is designed to determine at least one inductance (L1, L2) and one power factor (PF1, PF2) respectively of the at least two heating elements (12a, 12b) combined to form a heating zone (10) and to determine the operating state as a function of the inductances (L1, L2) and power factors (PF1, PF2) of the two heating elements (12a, 12b) and as a function of the selected power level.

2. Hob according to claim 1, **characterised in that** the heating elements (12a, 12b) are induction heating elements, the power supply unit (14) is an inverter and the characteristic variable of the heating current is a frequency (f1, f2) of the heating current.

3. Hob according to one of the preceding claims, **characterised in that** the different phases (P1, P2) follow one another or are separated by a time interval (I).

4. Hob according to one of the preceding claims, **characterised in that** the heating elements (12a, 12b) combined to form a heating zone (10) are disposed concentrically.

5. Hob according to one of claims 1-3, **characterised in that** the heating elements (12a, 12b) are disposed in a two-dimensional grid and the control unit (18) is designed to combine the heating elements (12a, 12b) to form flexibly definable heating zones (10).

6. Hob according to one of the preceding claims, **characterised in that** the control unit (18) is designed not to activate any of the heating elements (12a, 12b) of the heating zone (10) in at least one further phase (I) of the heating period (T).

7. Hob according to one of the preceding claims, **characterised in that** the control unit (18) is designed to operate all the heating elements (12a, 12b) combined to form the heating zone (10) simultaneously in at least a second operating state.

8. Hob according to one of the preceding claims, **characterised in that** the control unit (18) is designed to determine a variable (D) of a cooking utensil element (20) placed on the heating zone (10) and to define the length of the different phases (P1, P2) as a function of the variable (D), in order to achieve homogeneous heating power over a base surface of the cooking utensil element (20).

9. Hob according to one of the preceding claims, **characterised in that** the control unit (18) is designed to define the length of the different phases (P1, P2) in such a manner that the heating powers produced by the heating elements (12a, 12b) in the different phases (P1, P2) have a predefined ratio to one another.

10. Hob according to one of the preceding claims, **characterised in that** the at least two heating elements (12a, 12b) activated in different phases (P1, P2) of a heating period (T) are operated in at least one range of power levels at the same heating power.

11. Hob according to one of the preceding claims, **characterised in that** the at least two heating elements (12a, 12b) activated in different phases (P1, P2) of a heating period (T) are operated in at least one range of power levels at different heating powers.

12. Method for operating a hob having a number of heating elements (12a, 12b) combined to form a heating zone (10), at least one power supply unit (14) for generating a heating current for operating the heating elements (12a, 12b), a switching unit (16) for opening and closing a power circuit comprising the at least one power supply unit (14) and at least one of the heating elements (12a, 12b), wherein a characteristic variable of the heating current is determined as a function of a power level selected to operate the heating zone (10) and/or the switching unit (16) is actuated as a function of the power level, wherein in at least one operating state at least two of the heating elements (12a, 12b) combined to form a heating zone (10) are activated in different phases (P1, P2) of a heating period (T), **characterised in that** at least one inductance (L1, L2) and one power factor (PF1, PF2) respectively of the at least two heating elements (12a, 12b) combined to form a heating zone (10) are determined and the operating state is determined as a function of the inductances (L1, L2) and power factors (PF1, PF2) of the two heating elements (12a, 12b) and as a function of the selected power level.

13. Method according to claim 12, **characterised in that** the heating elements (12a, 12b) are induction heating elements, the power supply unit (14) is an inverter and the characteristic variable of the heating current is a frequency (f1, f2) of the heating current.

## Revendications

1. Plaque de cuisson comprenant :

   - plusieurs éléments chauffants (12a, 12b) pouvant être regroupés en une zone de chauffage (10)
   - au moins une unité d'alimentation en courant (14) destinée à générer un courant de chauffage pour faire fonctionner les éléments chauffants (12a, 12b),
   - une unité de commutation (16) destinée à ouvrir et fermer un circuit de courant comprenant l'au moins une unité d'alimentation en courant (14) et au moins un des éléments chauffants (12a, 12b) et
   - une unité de commande (18) dotée de moyens destinés à déterminer une grandeur caractéristique du courant de chauffage et de moyens destinés à commander l'unité de commutation (16) en fonction d'un étage de puissance sélectionné pour le fonctionnement de la zone de chauffage (10), l'unité de commande (18), dans au moins un premier état de fonctionnement, étant conçue pour activer deux éléments chauffants (12a, 12b) regroupés en une zone de chauffage (10) pendant des phases différentes (P1, P2) d'une période de chauffage (T), **caractérisée en ce que**

l'unité de commande (18) est conçue pour déterminer respectivement au moins une inductance (L1, L2) et un facteur de puissance (PF1, PF2) des au moins deux éléments chauffants (12a, 12b) regroupés en une zone de chauffage (10) et pour déterminer l'état de fonctionnement en fonction des inductances (L1, L2) et des facteurs de puissance (PF1, PF2) des deux éléments chauffants (12a, 12b) et en fonction de l'étage de puissance sélectionné.

2. Plaque de cuisson selon la revendication 1, **caractérisée en ce que** les éléments chauffants (12a, 12b) sont des éléments chauffants à induction, **en ce que** l'unité d'alimentation en courant (14) est un convertisseur continu-alternatif et **en ce que** la grandeur caractéristique du courant de chauffage est une fréquence (f1, f2) du courant de chauffage.

3. Plaque de cuisson selon l'une quelconque des revendications précédentes, **caractérisée en ce que** les différentes phases (P1, P2) se succèdent les unes aux autres ou sont séparées par un intervalle de temps (I).

4. Plaque de cuisson selon l'une quelconque des revendications précédentes, **caractérisée en ce que** les éléments chauffants (12a, 12b) regroupés en une zone de chauffage (10) sont disposés de manière concentrique.

5. Plaque de cuisson selon l'une quelconque des revendications 1 à 3, **caractérisée en ce que** les éléments chauffants (12a, 12b) sont disposés dans un réseau bidimensionnel et **en ce que** l'unité de commande (18) est conçue pour regrouper les éléments chauffants (12a, 12b) en zones de chauffage (10) définissables de manière flexible.

6. Plaque de cuisson selon l'une quelconque des revendications précédentes, **caractérisée en ce que** l'unité de commande (18), pendant au moins une phase (I) supplémentaire de la période de chauffage (T), est conçue pour n'activer aucun des éléments chauffants (12a, 12b) de la zone de chauffage (10).

7. Plaque de cuisson selon l'une quelconque des revendications précédentes, **caractérisée en ce que** l'unité de commande (18), dans au moins un deuxième état de fonctionnement, est conçue pour faire fonctionner simultanément tous les éléments chauffant (12a, 12b) regroupés en la zone de chauffage (10).

8. Plaque de cuisson selon l'une quelconque des revendications précédentes, **caractérisée en ce que** l'unité de commande (18) est conçue pour détecter une grandeur (D) d'un élément de batterie de cuisine (20) posé sur la zone de chauffage (10) et pour déterminer la longueur des différentes phases (P1, P2) en fonction de la grandeur (D) afin d'obtenir une puissance de chauffage homogène sur une surface de fond de l'élément de batterie de cuisine (20).

9. Plaque de cuisson selon l'une quelconque des revendications précédentes, **caractérisée en ce que** l'unité de commande (18) est conçue pour déterminer la longueur des différentes phases (P1, P2) de manière à ce que les puissances de chauffage générées par les éléments chauffants (12a, 12b) pendant les différentes phases (P1, P2) soient dans un rapport prédéfini.

10. Plaque de cuisson selon l'une quelconque des revendications précédentes, **caractérisée en ce que** les au moins deux éléments chauffants (12a, 12b) activés pendant différentes phases (P1, P2) d'une période de chauffage (T) fonctionnent dans au moins une zone d'étages de puissance ayant la même puissance de chauffage.

11. Plaque de cuisson selon l'une quelconque des revendications précédentes, **caractérisée en ce que** les au moins deux éléments chauffants (12a, 12b) activés pendant différentes phases (P1, P2) d'une période de chauffage (T) fonctionnent dans au moins une zone d'étages de puissance ayant différentes puissances de chauffage.

12. Procédé de fonctionnement d'une plaque de cuisson comprenant plusieurs éléments chauffants (12a, 12b) regroupés en une zone de chauffage (10), au moins une unité d'alimentation en courant (14) destinée à générer un courant de chauffage pour faire fonctionner les éléments chauffants (12a, 12b), une unité de commutation (16) destinée à ouvrir et fermer un circuit de courant comprenant l'au moins une unité d'alimentation en courant (14) et au moins un des éléments chauffants (12a, 12b), une grandeur caractéristique du courant de chauffage étant déterminée en fonction d'un étage de puissance sélectionné pour faire fonctionner la zone de chauffage (10) et/ou l'unité de commutation (16) étant activée en fonction de l'étage de puissance, au moins deux des éléments chauffants (12a, 12b) regroupés en une zone de chauffage (10), dans au moins un état de fonctionnement, étant activés pendant différentes phase (P1, P2) d'une période de chauffage (T), **caractérisé en ce que** respectivement au moins une inductance (L1, L2) et un facteur de puissance (PF1, PF2) des au moins deux éléments chauffants (12a, 12b) regroupés en une zone de chauffage (10) sont déterminés et **en ce que** l'état de fonctionnement est déterminé en fonction des inductances (L1, L2) et des facteurs de puissance (PF1, PF2) des deux éléments chauffants (12a, 12b) et en fonction de l'étage de puissance sélectionné.

13. Procédé selon la revendication 12, **caractérisé en ce que** les éléments chauffants (12a, 12b) sont des éléments chauffants à induction, **en ce que** l'unité d'alimentation en courant (14) est un convertisseur continu-alternatif et **en ce que** la grandeur caractéristique du courant de chauffage est une fréquence (f1, f2) du courant de chauffage.

Fig. 1

Fig. 2

Leistung

T

p1< Pgoal    p2 > Pgoal

Pgoal

**P1**    **P2**

Zeit

r*T    (1 - r)*T

## Fig. 3

Leistung

T

p1< Pgoal    p2 > Pgoal

Pgoal

**P1**    **P2**    I

Zeit

r*T    ton2    (1 - r)*T

## Fig. 4

Leistung

T

Pgoal

**P2**

**P1**    I

Zeit

## Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004003126